# EUROPEAN PATENT APPLICATION

(11) **EP 0 902 074 A1**
(43) Date of publication of application: **17.03.1999**
(21) Application number: 97306625.1
(22) Date of filing: 29.08.1997
(51) Int. Cl.: C09K 5/00, C23F 11/08

(54) **Aluminium blackening inhibitory additive and coolant composition containing same**

(71) Applicant: CCI Co. Limited, Hashima-gun, Gifu (JP)
(72) Inventor: Miyake, Yuji, Seki, Gifu (JP); Mori, Yasuaki, Kakamigahara, Gifu (JP)
(74) Representative: Austin, Hedley William

(57) **Abstract**

An aluminum blackening inhibitory additive for use in coolant fluid or a coolant composition to be blended in coolant fluid for a cooling system of an internal-combustion engine is disclosed, which can effectively prevent blackening of aluminum or aluminum alloy parts of the cooling system by including at least one ionic lithium compound when a hydrocarbyl carboxylic acid exists in the coolant fluid or composition in which no phosphates, amine salts or silicates are contained. An aluminum blackening inhibitory coolant composition is also disclosed, which includes a hydrocarbyl carboxylic acid but does not contain phosphates, amine salts or silicates. The composition include at least one ionic lithium compound for preventing blackening of aluminum parts which contact a hydrocarbyl carboxylic acid.

## Description

### BACKGROUND OF THE INVENTION

### Field of the Invention:

This invention generally relates to an aluminum blackening inhibitory additive and a coolant concentrate or composition containing such an additive for use in coolant fluid for a cooling system of an internal-combustion engine.

### Background Art:

Aluminum, aluminum alloy, cast iron, steel, brass, solder and copper are generally used in a heat exchanging cooling system of an internal-combustion engine. These metals are apt to get corroded through contact with water or air. There have been proposed coolant compositions containing phosphates, amine salts, and/or silicates in an attempt to inhibit such metal corrosion.

However, those chemicals are not without certain shortcomings. Phosphates when they eventually enter a river or pond will accumulatively make those waters excessively nutritive, raising the values of BOD (biochemical oxygen demand) and COD (chemical oxygen demand) in the waters, and lead to generation of algae, which in turn will lead to generation of "red tide" and sludge in the waters, which are environmentally hazardous.

Phosphates tend also to form precipitation in coolant fluid by chemically reacting with hard water substances often contained in the coolant fluid, which will deteriorate the metal corrosion inhibitive function of the coolant fluid and may plug the passages of the cooling system.

Amine salts may produce nitrosoamine, regarded as a carcinogenic substance, by chemically reacting with a nitrite when they coexist in coolant fluid.

Silicates are rather unstable in coolant fluid, and are likely to form gel when the coolant temperature or pH substantially changes, or other salts coexist in the coolant fluid, deteriorating the metal corrosion inhibitive function of the coolant fluid.

There have been proposed metal corrosion inhibitive coolant compositions containing a hydrocarbyl carboxylic acid, without containing phosphates, amine salts or silicates to eliminate the foregoing shortcomings inherent to these chemicals. However, such a coolant composition when blended into coolant fluid will blacken the surfaces of aluminum and aluminum alloy parts by the carbon in a hydrocarbyl carboxylic acid.

Users of such a coolant composition usually believe such blackening phenomenon is an indication of progressive aluminum corrosion. In fact such aluminum or aluminum alloy blackening occurs immediately aluminum or aluminum alloys are immersed in a coolant fluid containing a hydrocarbyl carboxylic acid, a proof that such blackening phenomenon is not an indication of aluminum corrosion.

At any rate it is desirable to eliminate such aluminum blackening which occurs in a cooling system.

The inventors of the present invention have discovered that an ionic lithium compound can effectively eliminate such aluminum blackening.

### SUMMARY OF THE INVENTION

Accordingly, it is an object of the present invention to provide an aluminum blackening inhibitory additive, which can effectively inhibit aluminum surface blackening when blended directly into coolant fluid containing a hydrocarbyl carboxylic acid but not containing phosphates, amine salts or silicates.

It is another object of the present invention to provide an aluminum blackening/metal corrosion inhibitive coolant composition containing a hydrocarbyl carboxylic acid but not containing phosphates, amine salts or silicates, which can effectively inhibit surface blackening of aluminum or aluminum alloys.

An aluminum surface blackening inhibitory additive of the present invention further includes an ionic lithium compound or compounds.

An aluminum surface blackening/metal corrosion inhibitive coolant composition of the present invention comprises a glycol as a main ingredient, a hydrocarbyl carboxylic acid and an ionic lithium compound or compounds, without containing phosphates, amine salts or silicates.

Such a coolant composition may simply contain a blackening inhibitory additive of the present invention for inclusion of an ionic lithium compound or compounds.

### DETAILED DESCRIPTION OF PREFERRED EMBODIMENT

An aluminum surface blackening inhibitory additive according to the present invention can be blended directly into a coolant fluid which contains a hydrocarbyl carboxylic acid but does not contain phosphates, amine salts or silicates. The inhibitory additive contains an ionic lithium compound or compounds to inhibit blackening of the surfaces of aluminum or aluminum alloys in a cooling system of an internal-combustion engine which would otherwise take place by contacting a hydrocarbyl carboxylic acid.

Such ionic lithium compounds include, but are not limited to, lithium hydroxide, lithium nitrate, lithium triazole and lithium carbonate, among which lithium hydroxide is preferably utilized as lithium hydroxide can also effectively adjust pH of coolant fluid. A combination of these compounds may be used as well.

Such an inhibitory additive can be blended into a metal corrosion inhibitive coolant composition to provide a coolant composition of the present invention comprising a glycol as a main ingredient and a hydrocarbyl carboxylic acid, which in turn is blended into coolant fluid.

When an inhibitory additive of the present invention is to be contained in a coolant composition, the content range of 0.1-5.0 wt.% is adequate. An amount more than this does not provide the expected function economically, and an amount less than this does not provide the expected aluminum blackening inhibitive function effectively.

A metal corrosion inhibitive coolant composition of the present invention contains a glycol as a main ingredient and a hydrocarbyl carboxylic acid. Such glycols include, but are not limited to, ethylene glycol, propylene glycol, 1,3-buthylene glycol, hexylene glycol, diethylene glycol, or glycerol, among which ethylene glycol and propylene glycol are preferred,

The coolant composition does not include any phosphates, amine salts or silicates for the reasons described earlier. Instead, the coolant composition includes as metal corrosion inhibitor a hydrocarbyl carboxylic acid or acids such as a monobasic acid, dibasic acid or alkylbenzoic acid, such as 2-ethylhexanoic acid, sebasic acid, p-tert-buthylbenzoic acid, or benzoic acid, in an amount of 0.5-5.0 wt.%.

However, a hydrocarbyl carboxylic acid blackens the surfaces of aluminum and aluminum alloys in a cooling system. In order to inhibit such blackening, a coolant composition of the present invention also contains an ionic lithium compound or compounds.

It is preferred that such an ionic lithium compound or compounds are included in an amount of 0.1-5.0 wt.%. In case lithium hydroxide is used to also provide an effective pH control, an effective amount of more than 0.1 wt.% should be used.

In case lithium nitrate, lithium triazole or lithium carbonate is used to also provide an effective metal corrosion inhibition, an effective amount of more than 0.1 wt.% should be used.

The coolant composition can contain a triazole or triazoles and/or a magnesium compound or compounds. Such triazoles include, but are not limited to, tolyltriazole and benzotriazole. These triazoles provide excellent metal corrosion inhibition, especially for copper. The coolant composition can preferably include 0.05-1.0 wt.% of a triazole or triazoles.

Such magnesium compounds include, but are not limited to, magnesium hydroxide, magnesium oxide, magnesium carbonate, magnesium sulfate, magnesium nitrate, magnesium benzoate, magnesium glutamate, magnesium succinate, magnesium phthalate, magnesium salicylate, magnesium maleate, and magnesium chloride. Magnesium compounds can provide excellent metal corrosion inhibition, especially for aluminum and aluminum alloys, and do not lose the inhibitive power even when blended together with a silicate or phosphate in coolant fluid. Such a magnesium compound or compounds can be contained in an amount of 0.001-0.5 wt.%. An amount less than 0.001 wt.% does not provide an effective metal corrosion inhibition, and an amount more than 0.5 wt.% does not provide corrosion inhibition economically.

The coolant composition of the present invention can additionally include an antifoamer and/or coloring. The coolant composition can also contain conventional metal corrosion inhibitors such as molybdate, tungstate, sulfate, nitrate, mercaptobenzothiazole, and/or their alkali metal salts, selectively.

### Metal Corrosion Test:

Tests were carried out using an embodiment coolant composition (hereinafter referred to as "Embodiment") of the present invention and a comparison coolant composition (hereinafter referred to as "Comparison") to study the metal corrosion inhibition by comparison.

As shown in Fig. 1, Embodiment consisted of 0.91 wt.% of lithium hydroxide, 2.0 wt.% of p-tert-butylbenzoic acid, 1.27 wt.% of benzoic acid, 0.04 wt.% of lithium nitrate, 0.3 wt.% of tolyltriazole, 91.48 wt.% of ethylene glycol, and 4.0 wt.% of water, while Comparison consisted of 1.21 wt.% of potassium hydroxide, 2.0 wt.% of p-tert-butylbenzoic acid, 1.27 wt.% of benzoic acid, 0.05 wt.% of sodium nitrate, 0.3 wt.% of tolyltriazole, 91.17 wt.% of ethylene glycol, and 4.0 wt.% of water. Both were diluted to 30 vol.% with water and their pH was adjusted to 7.8.

The tests were carried out in accordance with the Japanese Industrial Standards (JIS) K 2234-1987 Type 2 for metal corrosion testing. The metal pieces used for the tests were prepared of aluminum alloy (cast aluminum), cast iron, steel, brass, solder, and copper.

The metal corrosion suffered on the test metal pieces in the tests were all within the criteria provided by JIS, however, the appearance of the aluminum alloy (cast aluminum) greatly changed or blackened in Comparison, while in Embodiment no such changes were observed.

The embodiment surface blackening inhibitive coolant composition used in the tests excellently inhibited blackening for aluminum alloy in a coolant fluid where no phosphates, amine salts or silicates were added but a hydrocarbyl carboxylic acid was used.

The test results show that a coolant composition of the present invention comprising a glycol as a main ingredient, at least one hydrocarbyl carboxylic acid and at least one ionic lithium compound without containing phosphates, amine salts or silicates, can provide excellent metal corrosion inhibition as well as inhibition of aluminum surface blackening without eventually making river waters or lake waters excessively nutritive, or producing carcinogenic substances such as nitrosoamine. Such a coolant composition also does not form precipitation or gel in coolant fluid.

The embodiment which has been described herein is set forth here by way of the illustration but not of limitation. It is apparent to the skilled in the art that many other embodiments may be made without departing materially from the spirit and scope of this invention.

**Table 1**

| | EMBODIMENT wt.% | COMPARISON Wt.% |
|---|---|---|
| Lithium Hydroxide | 0.91 | - |
| Potassium Hydroxide | - | 1.21 |
| p-tert-buthylbenzoic Acid | 2.0 | 2.0 |
| Benzoic Acid | 1.27 | 1.27 |
| Lithium Nitrate | 0.04 | - |
| Sodium Nitrate | - | 0.05 |
| Tolyltriazole | 0.3 | 0.3 |
| Ethylene Glycol | 91.48 | 91.17 |
| Water | 4.0 | 4.0 |
| Total | 100 | 100 |
| pH 30 vol.% | 7.8 | 7.8 |

**Table 2**

| | | JIS K2234 1987 Criteria | EMBODIMENT | COMPARISON |
|---|---|---|---|---|
| Change in Weight of Test Piece mg/cm² | Cast Al | ± 0.30 | -0.04 | -0.14 |
| | Cast Iron | ± 0.30 | 0.01 | 0.01 |
| | Steel | ± 0.15 | -0.04 | -0.02 |
| | Brass | ± 0.15 | -0.03 | -0.08 |
| | Solder | ± 0.30 | -0.02 | -0.04 |
| | Copper | ± 0.15 | -0.05 | -0.11 |
| pH Post Test | | 7.0-11.0 | 8.2 | 8.1 |
| Appearance of Cast Al | | | No Change | Heavily Blackened |
| Appearance of Others | | | No Change | No Change |

## Claims

1. An aluminum blackening inhibitory additive for use in a coolant fluid containing a hydrocarbyl carboxylic acid but not containing phosphates, amine salts or silicates, comprising at least one ionic lithium compound.

2. An aluminum blackening inhibitory additive for use in a coolant composition containing a hydrocarbyl carboxylic acid but not containing phosphates, amine salts or silicates, comprising at least one ionic lithium compound.

3. The aluminum blackening inhibitory additive of claim 1 or 2, wherein said ionic lithium compound is lithium hydroxide.

4. An aluminum blackening inhibitory coolant composition comprising a glycol as a main ingredient, at least one hydrocarbyl carboxylic acid and at least one ionic lithium compound, further characterized in that no phosphates, amine salts or silicates are contained.

5. The aluminum blackening inhibitory coolant composition of claim 4, wherein said ionic lithium compound is lithium hydroxide.

6. The aluminum blackening inhibitory coolant composition of claim 4 or 5, further comprising at least one triazole.

7. The aluminum blackening inhibitory coolant composition of claim 4 or 5, further comprising at least one magnesium compound.
